# EUROPÄISCHE PATENTSCHRIFT

(11) **EP 2 626 165 B1**
(45) Veröffentlichungstag und Bekanntmachung des Hinweises auf die Patenterteilung: **18.04.2018**
(21) Anmeldenummer: 12154242.7
(22) Anmeldetag: 07.02.2012
(51) Int. Cl.: B23K 26/10, B23K 37/04

(54) **Werkstückauflage**
Work piece support
Support de pièces

(43) Veröffentlichungstag der Anmeldung: 14.08.2013
(73) Patentinhaber: Bystronic Laser AG, 3362 Niederönz (CH)
(72) Erfinder: Wüthrich, Matthias, 4900 Langenthal (CH); Silberbauer, Günther, 4813 Uerkheim (CH)
(74) Vertreter: Patentbüro Paul Rosenich AG

(56) Entgegenhaltungen:
- DE-A1- 4 242 373
- JP-A- 63 230 293
- US-A- 3 262 348

## Beschreibung

Die Erfindung betrifft eine Werkstückauflage zur Abstützung eines zu bearbeitenden, vorzugsweise plattenförmigen Werkstückes, gemäß dem Oberbegriff von Anspruch 1.

Die Problematik im Zusammenhang mit der Bearbeitung von Werkstücken, die auf einer derartigen Werkstückauflage, auch Auflagerost genannt, liegen, besteht darin, dass das Werkzeug bzw. ein vom Werkzeug ausgehender (Laser-)Strahl mit dem darunterliegenden Auflagerost in Wechselwirkung tritt (Schmelzen, Einschneiden, Reflexionen, etc.). Dies führt einerseits zu verminderter Bearbeitungs- bzw. Schnittqualität, andererseits zu einer unerwünschten "Mitbearbeitung" des Auflagerostes, wodurch die Lebensdauer des Auflagerostes verkürzt wird. Im Stand der Technik sind nun verschiedentlich Lösungen bekannt, die ein selektives Absenken eines einzelnen Rostelementes unterhalb des Werkzeuges bzw. Laserbearbeitungskopfes vorschlagen.

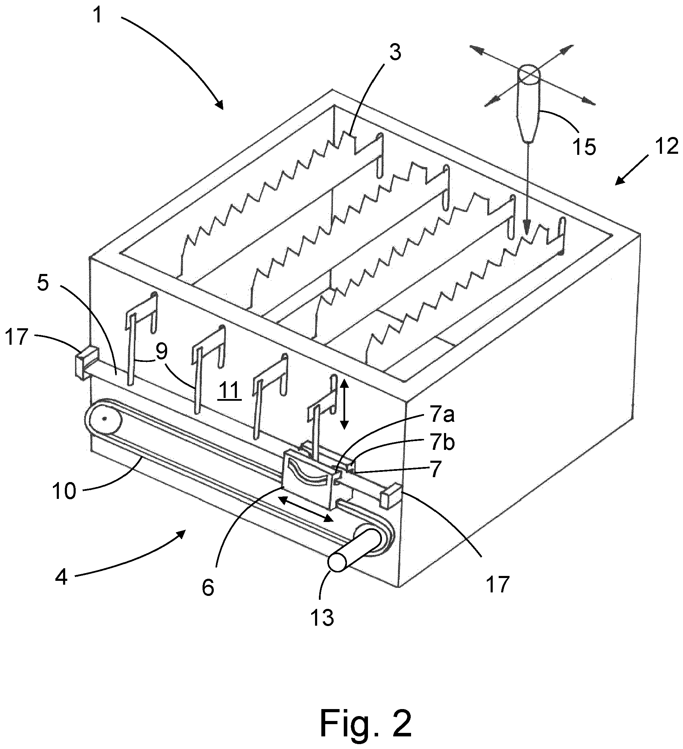

Die JP 63-230293 A offenbart eine Laserbearbeitungsmaschine mit einem Auflagerost, dessen Elemente einzeln absenkbar sind. Beim Einführen eines das Werkstück tragenden Auflagetisches in eine Laserbearbeitungsmaschine (Fig. 2) sind die mit den Rostelementen verbundenen Zapfen In einer gemeinsamen Kulissenführung geführt. Durch einen lokal nach unten verlaufenden Bereich der Kulissenführung wird genau ein Zapfen und das damit verbundene Rostelement nach unten abgesenkt. Der Nachteil dieser Lösung besteht darin, dass die Kraftübertragung nicht "rund" bzw. "geschmeidig" erfolgt. Die Umwandlung einer horizontalen Bewegung der Führung in eine vertikale Bewegung der Rostelemente ist mit grosser Reibung verbunden. Dies ist besonders problematisch in einem Bereich, in dem sich ständig Schmutz, Staub, Spänne etc. ablagern. Im schlimmsten Fall kann es zum Festsetzen, zu Verklemmungen, Verbiegungen, etc., also auch zu irreversiblen Schäden kommen. Die Zuverlässigkeit einer derartigen Werkstückauflage ist aus diesem Grund nicht gegeben.

Die JP 59-127988 A geht auf einen ähnlichen, wenn auch in einigen Aspekten unterschiedlichen Mechanismus (ebenfalls Kulissenführung) zurück. Die horizontale Ablenkung wird in eine vertikale Absenkung des Rostelementes übertragen, wie anhand der Figuren dieser Druckschrift deutlich wird.

Schon weiter abliegend ist der Gegenstand der JP 05-237685 A. Hier werden die einzelnen Rostelemente durch Unterdruck ("suction") nach unten gezogen.

Ein linear verfahrbarer Antriebswagen zum Bewegen von verschiedenen Rostelementen offenbart die WO 2007/134628 A1 (Fig. 2 und Fig. 7). Allerdings ist hier zusätzlich ein gesonderter Antrieb zum Verfahren des eigentlichen Antriebswagens erforderlich, wodurch die Konstruktion aufwendig wird. Ausserdem müssen hohe Anforderungen an die Steuerung erfüllt werden, was sich ungünstig auf der Kostenseite niederschlägt.

Eine selektive Absenkung jenes Rostelementes, das gerade unterhalb des Laserbearbeitungskopfes liegt, offenbart auch die JP 01-113195 A.

Eine gesonderte Absenkung von Rostelementen offenbart z. B. auch die EP 1 340 584 B1.

Die US 3,362,348 A offenbart im Zusammenhang mit einer Schneidvorrichtung oder einem formgebenden Werkzeug einen Tisch mit einer flexiblen Auflage, auf der flexible Werkstücke bearbeitet werden können. Die Auflagefläche wird durch Umlenkrollen, die an einem verfahrbaren Wagen sitzen, lokal abgesenkt, um eine Bearbeitungsstelle zu definieren. Durch das lokale Absenken der Auflage wird verhindert, dass die Auflage an der Bearbeitungsstelle durch das Bearbeitungswerkzeug beschädigt wird. Der Antrieb zur Bewegung des Wagens relativ zur Auflage ist im Wagen selbst integriert.

Die DE 42 42 373 A1 offenbart eine Stapelschneidvorrichtung zum Schneiden von Stoffen bzw. Stofflagen. Die Stapelschneidvorrichtung umfasst ein Tragelement, einen Stapelhaltegurt, der an dem Tragelement in Längsrichtung hin- und herbewegbar angeordnet ist, und einen Schneidkopf, der in Querrichtung über den Haltegurt hin und herbewegbar ist. Im Haltegurt sind Saugeinrichtungen ausgebildet. Durch den durch die Saugeinrichtungen erzeugten Unterdruck werden die Stapel gehalten.

Weitere Bearbeitungsmaschinen mit Werkstückauflagen offenbaren die DE 10 2005 026 889 B4, EP 1 926 569 B1, WO 2009/024166 A1, WO 2009/065429 A1, WO 2007/134627 A1, WO 2007/134630 A1, WO 2007/134631 A1, WO 2009/033497 A1, EP 1 425 142 B1 und die EP 0 571 688 B1.

Die Erfindung setzt sich zum Ziel, eine Werkstückauflage bereitzustellen, die die oben beschriebenen Nachteile nicht aufweist und die sich durch hohe Zuverlässigkeit, eine "runde" und "geschmeidige" Bewegungsübertragung und durch eine besonders einfache, störungsfreie und wartungsarme Absenkeinrichtung auszeichnet. Die Absenkeinrichtung soll zudem kostengünstig herstellbar sein und mit möglichst wenigen Antriebselementen auskommen.

Der Erfindung liegt somit auch die Aufgabe zugrunde, Wechselwirkungen des Werkzeuges mit dem Auflagerost, insbesondere unerwünschte Reflektionen eines Laserstrahls von den Auflagenrosten, zu minimieren, dadurch die Schnittqualität positiv zu beeinflussen und die Lebensdauer der Auflagenroste zu erhöhen. Die Lösung soll ermöglichen, dass die Absenkeinrichtung auch geometrisch kompatibel zu den derzeit verwendeten Wechseltischen gestaltet werden kann und die Absenkung Idealerweise mit einem stationär in der Werkstückbearbeitungsmaschine integrierten Antrieb realisierbar ist, wodurch auf teure und aufwändige Einzelbetätigungen der Auflageroste verzichtet werden kann.

Diese Ziele werden mit einer Werkstückauflage der eingangs genannten Art durch die kennzeichnenden Merkmale des Anspruch 1 erreicht.

Durch das Vorsehen eines flexiblen Übertragungsmittels erfolgt die Kraft- bzw. Bewegungsübertragung wesentlich "runder" bzw. "geschmeidiger" als im Stand der Technik, auch deswegen, well das flexible Übertragungsmittel vorzugsweise gespannt ist und Querkräfte reduziert. Das Übertragungsmittel überträgt die durch das Auslenkmittel bewirkte lokale Auslenkung auf ein entsprechendes Auflageelement, wodurch dessen Absenkung veranlasst wird. Das Übertragungselement ist zwischen den Auflageelementen und dem Auslenkmittel und dessen Antriebsteilen zwischengeschaltet. Dies führt zusammen mit der runderen und damit reibungsloseren Bewegungsübertragung zu wesentlich höherer Zuverlässigkeit und höherer Resistenz gegen Schmutz, Staub, Spänne, etc., die durch die Bearbeitung des Werkstückes entstehen.

Die Ankopplung der Auflageelemente am Übertragungsmittel erfolgt direkt oder über Verbindungselemente. Die Auflageelemente sind jeweils einzeln am Übertragungsmittel angekoppelt, und zwar nacheinander entlang der Längserstreckung des Übertragungsmittels. Die Position des vorzugsweise linear verfahrbaren Auslenkmittels entlang des Übertragungsmittels bestimmt somit jenes Auflageelement, das gerade abgesenkt ist.

Vorzugsweise sind die in einer Richtung nacheinander angeordneten Auflageelemente voneinander beabstandet, ebenso die Ankopplungsstellen der Auflageelemente am Übertragungsmittel.

Die einzelnen Auflage- bzw. Rostelemente eines Laserbearbeitungstisches sind unabhängig voneinander absenkbar. Dabei soll jeweils vorzugweise jenes Rostelement oder jene Gruppe von Rostelementen abgesenkt werden, das/die sich gerade unterhalb des Laserkopfes befinden. Ein einziger Antriebsmechanismus soll dazu genügen.

Die Werkstückbearbeitungsmaschine kann mit ihrem Werkzeug grössere Sprünge, beispielsweise von einem Ende zum anderen Ende des Tisches positionieren, um dort mit der Bearbeitung fortzufahren. Hierfür kann auch vorgesehen werden, dass beabstandet mehrere Rastelemente abgesenkt werden können, um nicht unbedingt den gesamten Verfahrbereich mitfahren zu müssen. Zum Beispiel könnten zwei oder drei Positionen, welche vorzugsweise ähnlich beabstandet sind, jeweils gleichzeitig absenken, was keinen Nachteil an jenen Stellen bewirkt, wo die Bearbeitung des Werkstücks nicht stattfindet.

In einer konkreten Ausführungsform besteht dieser Antriebsmechanismus aus einem flexiblen Riemen, Kette, Seil, etc., das durch einen linear verfahrbaren Wagen als Auslenkmittel an der betreffenden Stelle nach unten ablenkbar ist. Als Umlenkmittel besitzt der Wagen Umlenkrollen oder eine entsprechend geformte Kurvenführung. Die einzelnen Rastelemente sind mit dem Riemen (oder Kette, Seil, etc.) vorzugsweise durch pleuelförmige Mitnehmer oder Verbindungselemente, vorzugsweise in quasi vertikaler Anordnung (Stäbe, Drähte, etc.) verbunden. Durch die Verfahrbarkeit des Wagens erspart man sich vorteilhafterweise eine Vielzahl einzelner Antriebe.

In einer konkreten Ausführungsform ist die Werkstückauflage ein Tisch, vorzugsweise ein Wechseltisch zum Schneiden von Plattenmaterialien, mit darunter befindlichen Auflageelementen, welche sich im Bereich des Schnitts absenken lassen. Die Lösung beruht auf dem Prinzip eines gemeinsamen Aktors in Form eines mit einem stationären Antrieb verbundenen und über einen Kettenzug verschiebbaren Wagen als Auslenkmittel. Durch den Wagen wird eine offene und stehende Kette geführt. Die offene Kette ist mit den Auflageelementen (Rostauflagen) in Wirkverbindung, und je nach Position der gewünschten Auflageelementabsenkung, wird der Wagen in entsprechende Position bewegt. Dabei wird das entsprechende Auflageelement unter dem plattenförmigen Werkstück, z. B. einem Blech, hinabbewegt, wodurch Laserreflektionen an der Blechunterseite reduziert werden. Dies führt zu einer beträchtlichen Qualitätssteigerung der Schnittfläche, wie Laboruntersuchungen ergeben haben. Erfahrungen zeigen, dass eine bereits geringe Absenkung einen grossen Vorteil bringen kann. Auch wird ein ungewolltes Verschweissen des geschnittenen Werkstücks mit der Auflage reduziert, respektive eliminiert.

Mit anderen Worten betrifft diese Ausführungsform der Erfindung eine Vorrichtung als Wechseltischausführung mit integrierten absenkbaren Auflagenrosten. Die Position der absenkenden Auflagenroste folgt der Werkzeug- bzw. Schneidkopfpositionierung. Die Absenkung wird nicht mit aufwändigen Mechanismen oder einzelnen Aktoren gelöst, sondern wird mit einem maschinenstationären Antrieb realisiert, welcher mit dem Wechseltisch gekoppelt wird. Dabei kommt mindestens ein in den Seitenwänden des Rahmens verbauter und entlang diesen verfahrbarer Wagen als Auslenkmittel zum Einsatz. Dieser Wagen ist an beliebiger Stelle mittels geeigneter Antriebselemente positionierbar. Die - beispielsweise mit Federn zurückgehaltenen, federbeaufschlagten - Auflageelemente (Auflageroste) werden dabei heruntergezogen.

Zusätzlich können (nicht dargestellte) Dämpfungselemente die Bewegung der Auflageelemente zurück in die Abstützposition positiv beeinflussen, sodass die Auflageelemente "sanft" an das Werkstück heranfahren und nicht an dieses anstossen, wodurch mechanische Vibrationen und dadurch verursachte Geräusche verhindert werden können.

In einem der Ausführungsbeispiele ist dies so gelöst, dass entlang zweier offener und beidseitig gespannter Synchronketten zwei synchron laufende Wagen verschoben werden. Die Synchronketten sind für jedes Auflageelement mit einem Zug- bzw. Verbindungselement verbunden. Angetrieben werden die Wagen vorzugsweise mittels eines endlosen Kettentriebs, welcher vorteilhaft mit dem stationären Antrieb mittels einer trennbaren Kupplung verbunden ist.

Eine Möglichkeit liegt darin, die Kette im Wagen mittels versetzten Umlenkrollen, z. B. Kettenrädern, umzulenken. Das Umlenken und dadurch Absenken der offenen Kette führt dann zum Herunterziehen der Auflageelemente. Dabei werden die beispielsweise federbeaufschlagten Auflageelemente in die Federn gedrückt (Rückstellkraft). Wird der Wagen weiterbewegt, so steigen die Auflageelemente wieder in ihre Abstützposition, wobei diese wieder unter das Werkstück geführt werden. Ein weiteres Ausführungsbeispiel basiert auf Kurvenbahnen, die auf die Kette wirken und die Kette zusammen mit den verbundenen Auflageelementen an entsprechender Stelle vertikal bewegen. Diese Ausführung bietet den Vorteil, dass das Bewegungsprofil beschleunigungsoptimiert ausgeführt werden kann. Damit reduzieren sich mechanische Geräusche oder Vibrationen.

Alternativ kann der Wechseltisch auch mit einem integrierten Antrieb für das Verfahren des Auslenkmittels und damit für das Absenken der Auflageelemente ausgestattet sein.

Bevorzugt ist das Übertragungsmittel eine Kette, ein Riemen, ein Band oder ein Seil, vorzugsweise eine Hülsenkette oder eine Rollenkette. Dies ermöglicht eine besonders einfache und kostengünstige Verwirklichung des Übertragungsmittels. Insbesondere die Verwendung einer Kette, vorzugsweise einer Hülsen- oder Rollenkette, stellt eine mechanisch beständige und verschleissfeste Lösung dar.

Bevorzugt ist das Übertragungsmittel gespannt gehalten, vorzugsweise durch gegenüberliegende, in Bezug auf die Werkstückauflage stationäre Befestigungseinrichtungen. Dadurch ist der Verlauf des Übertragungsmittels in jeder Position des Auslenkmittels eindeutig definiert. Die Bewegung des Auslenkmittels entlang der Langserstreckung des Übertragungsmittels und Kraftübertragung auf die Auflageelemente erfolgt nahezu reibungslos.

Bevorzugt verläuft das Übertragungsmittel unterhalb der Auflageelemente. In dieser Ausführungsform kann die Konstruktion darauf abgestellt werden, dass durch das Auslenkmittel eine Auslenkung des Übertragungsmittels nach unten hin erfolgt. Da auch das Auflageelement nach unten abgesenkt werden soll, sind keine weiteren Umlenk- oder Übertragungsmassnahmen erforderlich.

Bevorzugt Ist das Übertragungsmittel im Rahmen der Werkstückauflage (bzw. des Wechseltisches) integriert, wobei es vorzugsweise abgedeckt und dadurch von aussen nicht wirklich sichtbar ist. Durch die verborgene Anordnung im Rahmen bzw. durch die Abdeckung ist das Übertragungsmittel und auch das Auslenkmittel vor Funkenflug geschützt.

Bevorzugt sind die Auflageelemente an dem Übertragungsmittel jeweils über Verbindungselemente, vorzugsweise im Wesentlichen vertikal ausgerichtete Pleuel oder Stäbe, angekoppelt. Dies erweitert die Konstruktionsmöglichkeiten der Absenkeinrichtung, da die Ankopplung durch angepasste Verbindungselemente an beliebiger Stelle und beliebiger Seite des Übertragungsmittels erfolgen kann. Durch diese Flexibilität wird eine optimale Konstruktion "Übertragungsmittel - Auslenkmittel", d. h. der Verbindung zwischen dem Übertragungsmittel und dem Auslenkmittel ermöglicht. Auch entstehen bei diesen Verbindungselementen kaum bzw. nur geringe Querkräfte auf die Auflageroste, sodass die Krafteinleitung sanft und schonend erfolgt.

Bevorzugt verläuft das Übertragungsmittel im Wesentlichen parallel zu jener Richtung, entlang derer die Auflageelemente nacheinander angeordnet sind. Dies ergibt eine möglichst platzsparende Lösung. Bei dieser Lösung entspricht die Länge des Übertragungsmittels im Wesentlichen jener Länge, entlang derer die Auflageelemente nacheinander angeordnet sind, also z. B. der Seitenlänge eines Auflagetisches.

Das Auslenkmittel weist eine Führung auf, in der das Übertragungsmittel geführt ist und durch die das Übertragungsmittel lokal ausgelenkt ist. Die Führung ist vorzugsweise derart ausgebildet, dass die lokale Auslenkung des Übertragungsmittels nach unten erfolgt. Diese Ausführungsform basiert auf dem Prinzip, dass bereits allein das Bewegen des Auslenkmittels eine selektive Absenkung eines Auflageelementes bewirkt. Es sind somit keine zusätzlichen Antriebe nötig. Es muss lediglich ein Antrieb für das Verfahren des Auslenkmittels entlang der Längserstreckung des Übertragungsmittels bereitgestellt werden.

Bevorzugt ist die Führung eine Kurvenführung, vorzugsweise als Teil einer Kulissenführung. Dies ist eine besonders einfache und kostengünstig herzustellende Lösung, da für das Führen und Auslenken des Übertragungsmittels keine beweglichen Teile am Auslenkmittel vorgesehen werden müssen, Die Kurve kann mit entsprechenden Kurvenfunktionen beschleunigungs- und ruckoptimiert ausgeführt werden.

Bevorzugt wird die Führung durch Umlenkrollen gebildet, wobei vorzugsweise mindestens drei Umlenkrollen vorgesehen sind, die vorzugsweise eine "U"-artige Auslenkung des Übertragungsmittels bewirken. Diese Lösung erhöht die Geschmeidigkeit der Bewegungsübertragung noch zusätzlich und verringert die Reibung zwischen Auslenkmittel und Übertragungsmittel auf ein minimales Ausmass.

Die Führung weist zwei, quer zur Längserstreckung des Übertragungsmittels voneinander beabstandete Führungsbereiche mit einem nach oben hin frei bleibenden Zwischenbereich auf. Das Übertragungsmittel ist mit seinen Randbereichen jeweils in den Führungsbereichen geführt. Die Ankopplung der Auflageelemente an das Übertragungsmittel erfolgt im Bereich zwischen seinen geführten Randbereichen. Dadurch ist das Übertragungsmittel zuverlässig geführt, wobei sich gleichzeitig eine mittige und daher für die Kraftübertragung günstige Ankopplungsstelle für das Auflageelement bzw. das Verbindungselement ergibt.

Bevorzugt sind mindestens zwei Übertragungsmittel mit jeweils einem zugeordneten Auslenkmittel vorgesehen, wobei das erste Übertragungsmittel entlang eines ersten Randbereiches der Werkstückauflage und das zweite Übertragungsmittel entlang eines zweiten, dem ersten Randbereich gegenüberliegenden Randbereich der Werkstückauflage verläuft. Das Vorsehen jeweils eines Übertragungsmittels auf zwei gegenüberliegenden Seiten der Werkstückauflage sorgt für eine gleichmässige und kraftverteilte Absenkung. Die Übertragungsmittel verlaufen dabei im Wesentlichen parallel zueinander. Die Kraftübertragung erfolgt an beiden Enden des Auflageelementes, sodass sich eine über die Länge des Auflageelementes gleichmässige Absenkung ergibt.

In einer Ausführungsform sind entlang eines Übertragungsmittels zumindest zwei Auslenkmittel verfahrbar angeordnet. Die Auslenkmittel werden vorzugsweise durch denselben Antriebsmechanismus (z.B. Zugmitteltrieb) angetrieben und sind dadurch vorzugsweise in einem fixen Abstand voneinander angeordnet. Durch diese Massnahme muss nicht der ganze Formatbereich mit demselben Auslenkmittel (Wagen) abgedeckt werden, wodurch die Verfahrstrecke und Verfahrdauer im Vergleich zu nur einem einzigen Auslenkmittel pro Übertragungsmittel reduziert werden kann. Dass durch das zweite Auslenkmittel abgesenkte Auflageelement(e) an Stellen, an denen gerade nicht geschnitten wird, stört dabei nicht.

Bevorzugt sind die Auflageelemente länglich ausgebildet und erstrecken sich jeweils zwischen dem ersten Randbereich und dem zweiten Randbereich der Werkstückauflage. Insbesondere im Zusammenhang mit vorhergehender Ausführungsform ergibt sich dadurch eine Lösung mit möglichst wenigen Übertragungsmitteln.

Bevorzugt sind die Auflageelemente in Bezug auf die Übertragungsmittel derart ausgerichtet, dass der Winkel zwischen der Längserstreckung der Auflageelemente und der Längserstreckung der Übertragungsmittel einen von 90° abweichenden Wert aufweist, wobei vorzugsweise die Abweichung von 90° zumindest 5° beträgt. Die Auflageelemente sind somit nicht rechtwinklig zu den Übertragungsmittel bzw. den Seitenrahmen der Werkstückauflage angeordnet, Bei einer synchronen Bewegung zweier exakt gegenüberliegender Auslenkmittel werden die beiden Enden eines Auflageelementes leicht zeitversetzt abgesenkt. Dies ergibt eine runde und sanfte Absenkbewegung bzw. wieder Nach-oben-Bewegung, die eine Art "Abwälzen" ergibt.

Bevorzugt liegen ein dem ersten Übertragungsmittel zugeordnetes Auslenkmittel und ein dem zweiten Übertragungsmittel zugeordnetes Auslenkmittel einander gegenüber und sind derart synchronisiert, dass die Enden eines Auflageelementes synchron absenkbar sind. Die Auslenkmittel sind synchron zueinander angeordnet, sodass die Auflagen jeweils in Einem gleichmässig bzw. deren Enden synchron auf und ab bewegt werden.

Bevorzugt sind ein dem ersten Übertragungsmittel zugeordnetes Auslenkmittel und ein dem zweiten Übertragungsmittel zugeordnetes Auslenkmittel gegeneinander leicht versetzt angeordnet, sodass das eine Ende eines Auflageelementes zeitlich leicht verzögert zum anderen Ende des Auflageelementes absenkbar ist. Die Auslenkmittel sind versetzt angeordnet, sodass die eine Seite der Auflageelemente verzögert zur anderen Seite bewegt wird. Dadurch trifft das sich zurück bewegende Auflageelement sanft auf die Unterseite des Werkstückes auf, ähnlich einer abwälzenden Bewegung. Vibrationen und Geräusche, die ansonsten durch ein Anschlagen des gesamten Auflageelementes auf die Werkstückunterseite entstehen, werden dadurch beseitigt.

Bevorzugt weist die Werkstückauflage zum Verfahren des Auslenkmittels einen Zugmitteltrieb auf, vorzugsweise eine umlaufende Antriebskette, ein Antriebsriemen oder ein Antriebsseil. Dies ermöglicht einerseits eine einfache Ankopplung an einen Antrieb und gewährleistet andererseits ein zuverlässiges und reproduzierbares Verfahren des Auslenkmittels. Bevorzugt verläuft der Zugmitteltrieb im Wesentlichen parallel zum Übertragungsmittel.

Bevorzugt trägt jener Abschnitt des umlaufenden Zugmitteltriebes, der dem das Auslenkmittel tragenden Abschnitt des umlaufenden Zugmitteltriebes gegenüberliegt, Gegengewichte. Der Zugmitteltrieb verfügt dadurch jeweils in entgegengesetzte Richtung des Auslenkmittels wandernd Gegengewichte, die für eine Impulsentkopplung, respektive für einen Massenausgleich sorgen. Dies begünstigt die Reduktion von Vibrationen.

Bevorzugt weist die Werkstückauflage eine Antriebsschnittstelle für das Ankuppeln eines Antriebes, vorzugsweise eines Motors, für das Verfahren des Auslenkmittels auf. In dieser Ausführungsform ist der Antrieb nicht ein Integraler Bestandteil der Werkstückauflage. Die Antriebsschnittstelle erlaubt das Ankoppeln an einen Antrieb, der z. B. in einer Werkstückbearbeitungsmaschine angeordnet ist. Die Werkstückauflage kann daher auch als Wechseltisch ausgeführt sein, also auch als ein aus einer Bearbeitungsmaschine bewegbarer Wechseltisch. Ein derartiger Wechseltisch kann daher in verschiedenen Bearbeitungsmaschinen verwendet werden, wobei der Antrieb für das Auslenkmittel jeweils durch die Bearbeitungsmaschine zur Verfügung steht und bei Einschieben an diesen über die entsprechend ausgebildete Antriebsschnittstelle angekoppelt wird.

Bevorzugt weist die Antriebsschnittstelle eine Anordnung von Zähnen, vorzugsweise in Form eines Zahnrades, auf, die das lösbare Ankuppeln des Antriebes über eine Verzahnung ermöglicht. Dies erlaubt ein besonders einfaches und zuverlässiges Ankuppeln der Werkstückauflage an einen Antrieb. Der Eingriff erfolgt hier über eine Verzahnung, z.B. können Stirnräder in der Tischendlage in sich eingreifen.

Die Erfindung erreicht das oben genannte Ziel auch mit einer Werkstückbearbeitungsmaschine, insbesondere eine Laserbearbeitungsmaschine mit einer Werkstückauflage zur Abstützung eines zu bearbeitenden, vorzugsweise plattenförmigen Werkstückes und einem relativ zur Werkstückauflage bewegbaren Bearbeitungswerkzeug, insbesondere einem Laserbearbeitungskopf, wobei die Werkstückauflage nach einem der vorangehenden Ausführungsbeispiele ausgebildet ist.

Bevorzugt ist das Auslenkmittel in Bezug auf seine aktuelle Position entlang des Übertragungsmittels mit der Bewegung des Bearbeitungswerkzeuges oder eines vom Bearbeitungswerkzeug ausgehenden Strahles relativ zur Werkstückauflage derart synchronisiert ist, dass jeweils das bzw. die Auflageelement(e) unterhalb des Bearbeitungswerkzeuges oder des vom Bearbeitungswerkzeug ausgehenden Strahles in der abgesenkten Position ist (sind). Dies kann beispielsweise über eine Steuerung erfolgen, die einerseits mit dem Verfahrantrieb des Bearbeitungswerkzeuges zusammenwirkt und andererseits mit dem Verfahrantrieb des Auslenkmittels zusammenwirkt. Dadurch wird verhindert, dass das Werkzeug oder ein von diesem ausgehender Strahl mit dem/den betreffenden Auflageelement(en) in Wechselwirkung tritt.

Bevorzugt ist das Auslenkmittel in Bezug auf seine aktuelle Position entlang des Übertragungsmittels mit der Bewegung des Bearbeitungswerkzeuges oder des vom Bearbeitungswerkzeug ausgehenden Strahles relativ zur Werkstückauflage derart abgestimmt ist, dass das Auslenkmittel dem Bearbeitungswerkzeug oder dem vom Bearbeitungswerkzeug ausgehenden Strahl zeitlich verzögert nachgeführt wird, wobei vorzugsweise das Auslenkmittel erst dann unterhalb des Bearbeitungswerkzeuges positioniert ist, wenn das Werkstück durch die Wirkung des Bearbeitungswerkzeuges ganz oder teilweise durchstochen ist.

Wie die letzten beiden Ausführungsbeispiele zeigen kann die Steuerung verschiedenartige Strategien für das Verfahren des Auslenkmittels beinhalten, wie ein synchrones Mitfahren des Auslenkmittels mit dem Bearbeitungswerkzeug oder ein Nachführen des Auslenkmittels zur Position des Bearbeitungswerkzeuges. Dabei kann beispielsweise die Positionierung an jener Stelle, wo sich die Auflage absenken muss, fest gekoppelt synchron erfolgen, oder die Position und/oder die Absenkung kann so nachgeführt werden, dass sich das Auflageelement mit zeitlich verzögertem Effekt unterhalb des Bearbeitungswerkzeuges absenkt. In letzterem Fall wird das Auflageelement vorzugsweise erst dann abgesenkt, wenn der Laserstrahl des Laserbearbeitungswerkzeuges das Werkstück durchsticht oder kurz davor ist, das Werkstück zu durchstechen.

Die Steuerung kann daher auch so ausgebildet sein, dass sie bei Einstechen synchron oder zumindest zeitnah das Auflageelement absenkt, wenn der Einstechpunkt wirklich über einem Auflageelement erfolgt. Ist dies nicht der Fall, so bleibt mehr Zeit um das Auflageelement unter dem Bearbeitungswerkzeug bzw. dem Laserstrahl des Lagerkopfes abzusenken, nämlich so viel Zeit, bis der Laserstrahl, welcher das Werkstück bearbeitet, tatsächlich über das Auflageelement fährt.

Vorteilhafte Weiterbildungen sind in den Figuren und in den abhängigen Patentansprüchen dargelegt. Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
Fig. 1 eine Werkstückbearbeitungsmaschine im Überblick.
Fig. 2 eine erfindungsgemässe Werkstückauflage,
Fig. 3 ein Ausführungsbeispiel einer Absenkelnrichtung im Ausschnitt,
Fig. 4 eine erfindungsgemässe Absenkeinrichtung in schematischer Darstellung,
Fig. 5 ein Übertragungsmittel in Form einer Kette in nicht ausgelenkter Position (oben) und in nach unten ausgelenkter Position (unten),
Fig. 6 einen Detailausschnitt einer Werkstückauflage,
Fig. 7 im Ausschnitt eine Werkstückauflage mit einem an eine Schnittstelle angekoppelten Antrieb zum Verfahren des Auslenkmittels.

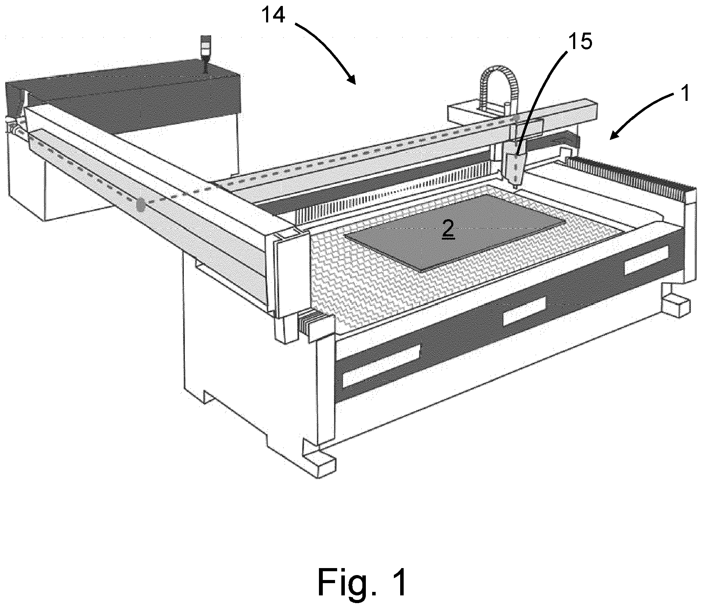

Fig. 1 zeigt eine Werkstückbearbeitungsmaschine 14 in Form einer Laserbearbeitungsmaschine mit einer Werkstückauflage 1 zur Abstützung eines zu bearbeitenden, vorzugsweise plattenförmigen Werkstückes 2, wie z. B. (Metall-)Platten, (Stahl-)Bleche, etc., und einem relativ zur Werkstückauflage 1 bewegbaren Bearbeitungswerkzeug 15 in Form eines Laserbearbeitungskopfes. Der Laserbearbeitungskopf ist vorzugsweise in allen drei Raumrichtungen verfahrbar.

Fig. 2 zeigt eine Werkstückauflage 1 in Form eines Tisches zur Abstützung des zu bearbeitenden, vorzugsweise plattenförmigen Werkstückes 2 in einer Bearbeitungsebene, mit mehreren länglichen Auflageelementen 3, die in ihrer Abstützposition das Werkstück 2 abstützen. Durch eine Absenkeinrichtung 4 sind Auflageelemente 3 jeweils aus der Abstützposition in eine abgesenkte Position bewegbar. Bei der Werkstückauflage aus Fig. 2 ist das rechteste Auflageelement 3 abgesenkt, während sich die übrigen Auflageelemente 3 in der Abstützposition befinden.

Die Absenkeinrichtung 4 umfasst ein längliches flexibles Übertragungsmittel 5 in Form einer Kette, an dem entlang seiner Längserstreckung die Auflageelemente 3 einzeln angekoppelt sind. Die Kette ist quer zu ihrer Längserstreckung auslenkbar, im dargestellten Beispiel nach unten. Die Absenkeinrichtung 4 umfasst des Weiteren ein Auslenkmittel 6 in Form eines Wagens, der entlang des Übertragungsmittels 5 verfahrbar ist. Das Auslenkmittel 6 lenkt an seiner Position das Übertragungsmittel 5 lokal aus, wobei die lokale Auslenkung mit einer Bewegung eines Auflageelements 3, das im Bereich der lokalen Auslenkung an das Übertragungsmittel 5 angekoppelt ist, in eine abgesenkte Position einhergeht. Grundsätzlich ist es auch denkbar, dass anstelle von nur einem Auflageelement 3 eine Gruppe benachbarter Auflageelemente 3 gleichzeitig abgesenkt werden. Dies z. B. dann, wenn der Abstand der Auflageelemente 3 voneinander sehr klein ist.

Das Übertragungsmittel 5 kann eine Kette, ein Riemen, ein Band, ein Seil oder ein anderes Zugmittel sein. Bevorzugt wegen ihrer mechanischen Resistenz sind Hülsen- oder Rollenketten.

Das Übertragungsmittel 5 ist in der dargestellten Ausführungsform an seinen Enden in Befestigungseinrichtungen 17 eingespannt und dadurch gespannt, d. h. unter Spannung, gehalten. Bevorzugt sind gegenüberliegende, In Bezug auf die Werkstückauflage 1 stationäre Befestigungseinrichtungen 17. Wie aus Fig. 2 zu sehen, verläuft das Übertragungsmittel 5 von den Auflageelementen 3 nach unten versetzt.

Die Auflageelemente 3 sind an dem Übertragungsmittel 5 jeweils über Verbindungselemente 9 angekoppelt, welche vorzugsweise als im Wesentlichen vertikal ausgerichtete Stäbe ausgebildet sind.

Das Übertragungsmittel 5 verläuft im Wesentlichen parallel zu jener Richtung, entlang derer die Auflageelemente 3 nacheinander angeordnet sind. Im dargestellten Ausführungsbeispiel verläuft das Übertragungsmittel 5 entlang der Seite des Auflagetisches. Die Auflageelemente 3 sind flächig ausgebildet, wobei diese - in Bezug auf die Darstellung - stehend senkrecht ausgerichtet sind, und weisen an ihrer- In Bezug auf die Darstellung - oberen Seite Zacken auf. Mit diesen Zacken wird die Kontaktfläche mit dem Werkstück 2 möglichst gering gehalten.

Das Auslenkmittel 6 weist eine Führung 7 auf, in der das Übertragungsmittel 5 geführt ist und durch die das Übertragungsmittel 5 lokal ausgelenkt ist. Die Führung 7 ist dabei derart ausgebildet ist, dass die lokale Auslenkung des Übertragungsmittels 5 nach unten erfolgt.

In der in Fig. 2 dargestellten Ausführungsform ist die Führung 7 eine Kurvenführung als Teil einer Kulissenführung, welche die lokale Auslenkung des Übertragungsmittels 5 bewirkt. Die Führung 7 umfasst zwei, quer zur Längserstreckung des Übertragungsmittels 5 voneinander beabstandete Führungsbereiche 7a, 7b mit einem nach oben hin frei bleibenden Zwischenbereich. Dabei ist das Übertragungsmittel 5 mit seinen Randbereichen jeweils in den Führungsbereichen 7a, 7b geführt. Die Ankopplung der Auflageelemente 3 an das Übertragungsmittel 5 erfolgt im Bereich zwischen seinen geführten Randbereichen.

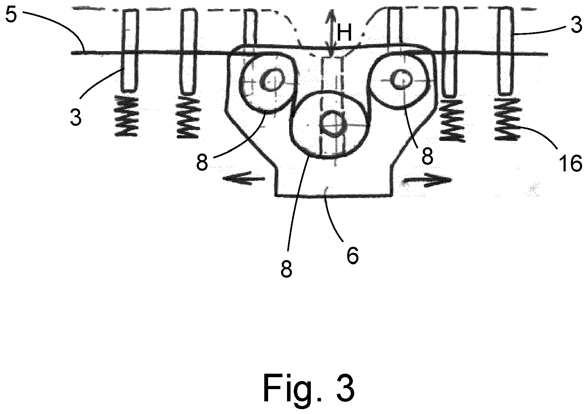

In der Ausführungsform der Fig. 3 ist die Führung 7 durch Umlenkrollen 8 gebildet. Dabei sind drei Umlenkrollen 8 vorgesehen, die eine "U"-artige Auslenkung des Übertragungsmittels 5 nach unten hin bewirken. Federmittel 16 sind an der Unterseite der Auflageelemente 3 angeordnet und drücken die Auflageelemente 3 nach oben in die Abstützposition. Sobald das Auslenkmittel 6 von dem aktuell abgesenkten Auflageelement 3 wegfährt, sorgt die Rückstellkraft des Federmittels 16 dafür, dass das federbeaufschlagte Auflageelement 3 aus seiner abgesenkten Position nach oben in die Abstützposition gedrückt wird. Der Einsatz derart wirkender Federmittel 16 ist nicht auf die Ausführungsform von Fig. 3 beschränkt, sondern kann grundsätzlich immer angewandt werden, um eine Rückstellkraft in die Abstützposition erreichen.

In Fig. 3 gibt die obere strichlierte Linie den Niveauverlauf aller Auflageelemente 3 wieder. Oberhalb des Auslenkmittels 6 ist das Niveau um die Distanz H, z. B. von 10 mm, abgesenkt.

Vorzugsweise sind mindestens zwei Übertragungsmittel 5 mit jeweils einem dazugehörigen Auslenkmittel 6 vorgesehen, wobei das erste Übertragungsmittel 5 entlang eines ersten Randbereiches 11 der Werkstückauflage 1 und das zweite Übertragungsmittel 5 entlang eines zweiten, dem ersten Randbereich gegenüberliegenden Randbereich 12 der Werkstückauflage 1 verläuft. Das zweite Übertragungsmittel 5 ist in Fig. 2 nicht zu sehen. In Fig. 2 ist der abgewandte Randbereich 12 jedoch mittels Pfeil angedeutet. Die Auflageelemente 3 sind länglich ausgebildet und erstrecken sich jeweils zwischen dem ersten Randbereich 11 und dem zweiten Randbereich 12 der Werkstückauflage 1.

Die Werkstückauflage 1 umfasst zum Verfahren des Auslenkmittels 6 einen Zugmitteltrieb 10, vorzugsweise eine umlaufende Antriebskette, ein Antriebsriemen oder ein Antriebsseil. Eine Antriebsschnittstelle 13 in Form einer Kupplung (in Fig. 2 nur schematisch dargestellt) ist für das lösbare Ankuppeln eines Antriebes 18, z. B. eines Motors, für das Verfahren des Auslenkmittels 6 vorgesehen. Die trennbare Antriebskupplung als Antriebsschnittstelle 13 wird später in einer Maschine zum Andocken des Antriebs an den Tisch bzw. Wechseltisch verwendet.

Es ist selbstverständlich möglich, dass anstelle eines Zugmitteltriebes andere Antriebsmechanismen verwendet werden. Beispielsweise kann ein im Auslenkmittel integrierter Motor verwendet werden, der mit einem Zahnrad auf einer Zahnstange verfahrbar ist.

Die Werkstückauflage 1 kann in Form eines Wechseltisches ausgebildet sein, also eines unabhängig von der Bearbeitungsmaschine bewegbaren, verschiebbaren, beschickbaren und/oder ankoppelbaren Tisches. Ein und derselbe Tisch kann dabei in verschiedenen Bearbeitungsmaschinen verwendet werden.

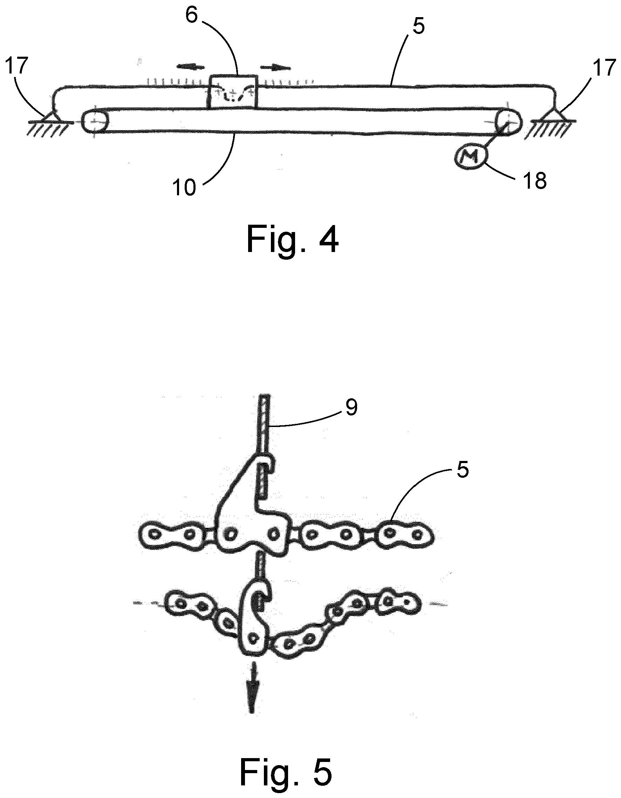

Fig. 4 zeigt die Funktionswelse der Erfindung in schematischer Darstellung, wobei das offene Übertragungsmittel 5 mit seinen Enden in gegenüberliegende, in Bezug auf die Werkstückauflage stationäre Befestigungseinrichtungen 17 eingespannt ist. Ein Antrieb 18 zum Verfahren des Auslenkmittels 6 ist ebenfalls schematisch dargestellt.

Fig. 5 zeigt eine bevorzugte Ausführungsform mit einer Kette als Übertragungsmittel 5. Der obere Teil der Fig. 5 zeigt einen geraden, nicht ausgelenkten Abschnitt der Kette. Der untere Teil der Fig. 5 zeigt einen nach unten ausgelenkten Abschnitt der Kette.

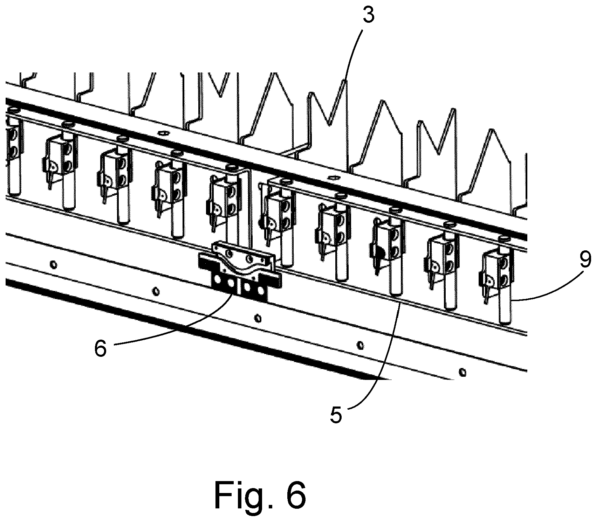

Fig. 6 zeigt im Detail einen Auflagetisch mit einer Vielzahl von Auflageelementen 3 und dazugehörigen Verbindungselementen 9 sowie das Auslenkmittel 6 mit Kurvenführung.

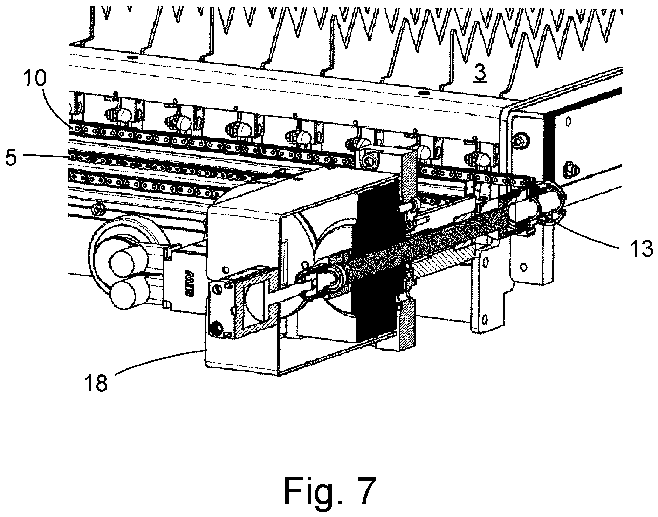

Fig. 7 zeigt einen Ausschnitt einer Werkstückauflage mit lösbar angekoppeltem Antrieb 18. Zur Verwirklichung der lösbaren Kupplung zwischen Antrieb und Antriebsschnittstelle 13 kann jede beliebige, dazu geeignete Konstruktion verwendet werden. Wie aus Fig. 7 ersichtlich, verlaufen der Zugmitteltrieb 10 und das Übertragungsmittel 5 parallel zueinander.

### Bezugszeichenliste

1 Werkstückauflage
2 Werkstück
3 Auflageelement
4 Absenkeinrichtung
5 Übertragungsmittel
6 Auslenkmittel
7 Führung
7a, 7b Führungsbereich
8 Umlenkrolle
9 Verbindungselement
10 Zugmitteltrieb
11 erster Randbereich der Werkstückauflage 1
12 zweiter Randbereich der Werkstückauflage 1
13 Antriebsschnittstelle
14 Werkstückbearbeitungsmaschine
15 Bearbeitungswerkzeug, z. B. Laserbearbeitungskopf
16 Federmittel
17 Befestigungseinrichtung
18 Antrieb zum Verfahren des Auslenkmittels 6

## Patentansprüche

1. Werkstückauflage (1) zur Abstützung eines zu bearbeitenden, vorzugsweise plattenförmigen Werkstückes (2), mit mehreren, vorzugsweise länglichen Auflageelementen (3), die in ihrer Abstützposition das Werkstück (2) abstützen, und mit einer Absenkeinrichtung (4), durch die Auflageelemente (3) jeweils aus der Abstützposition in eine abgesenkte Position bringbar sind, wobei die Absenkeinrichtung (4) mindestens ein längliches flexibles Übertragungsmittel (5) aufweist, an dem entlang seiner Längserstreckung die Auflageelemente (3) einzeln angekoppelt sind und das quer zu seiner Längserstreckung auslenkbar ist, und mindestens ein Auslenkmittel (6), das entlang des Übertragungsmittels (5) verfahrbar und dazu ausgebildet ist, um das Übertragungsmittel (5) lokal auszulenken, wobei eine lokale Auslenkung des Übertragungsmittels (5) mit einer Bewegung eines Auflageelements (3) oder einer Gruppe benachbarter Auflageelemente (3), das/die im Bereich der lokalen Auslenkung an das Übertragungsmittel (5) angekoppelt ist/sind, in eine abgesenkte Position einhergeht, und wobei das Auslenkmittel (6) eine Führung (7) aufweist, in der das Übertragungsmittel (5) geführt ist und durch die das Übertragungsmittel (5) lokal ausgelenkt ist, wobei vorzugsweise die Führung (7) derart ausgebildet ist, dass die lokale Auslenkung des Übertragungsmittels (5) nach unten erfolgt, **dadurch gekennzeichnet, dass** die Führung (7) zwei, quer zur Längserstreckung des Übertragungsmittels (5) voneinander beabstandete Führungsbereiche (7a, 7b) mit einem nach oben hin frei bleibenden Zwischenbereich aufweist, und dass das Übertragungsmittel (5) mit seinen Randbereichen jeweils in den Führungsbereichen (7a, 7b) geführt ist, und dass die Ankopplung der Auflageelemente (3) an das Übertragungsmittel (5) im Bereich zwischen seinen geführten Randbereichen erfolgt.

2. Werkstückauflage nach Anspruch 1, **dadurch gekennzeichnet, dass** das Übertragungsmittel (5) gespannt gehalten ist, vorzugsweise durch gegenüberliegende, in Bezug auf die Werkstückauflage (1) stationäre Befestigungseinrichtungen (17), und/oder dass das Übertragungsmittel (5) unterhalb der Auflageelemente (3) verläuft, und/oder dass das Übertragungsmittel (5) im Rahmen der Werkstückauflage (1) integriert und zumindest teilweise abgedeckt ist.

3. Werkstückauflage nach einem der Ansprüche 1 oder 2, **dadurch gekennzeichnet, dass** das Übertragungsmittel (5) im Wesentlichen parallel zu jener Richtung verläuft, entlang derer die Auflageelemente (3) nacheinander angeordnet sind, und /oder dass die Auflageelemente (3) an dem Übertragungsmittel (5) jeweils über Verbindungselemente (9), vorzugsweise im Wesentlichen vertikal ausgerichtete Verbindungsglieder, wie Stäbe oder Pleuel, angekoppelt sind.

4. Werkstückauflage nach einem der vorangehenden Ansprüche, **dadurch gekennzeichnet, dass** das Übertragungsmittel (5) eine Kette, ein Riemen, ein Band oder ein Seil ist, vorzugsweise eine Hülsenkette oder eine Rollenkette.

5. Werkstückauflage nach einem der vorangehenden Ansprüche, **dadurch gekennzeichnet, dass** das die Führung (7) eine Kurvenführung, vorzugsweise als Teil einer Kulissenführung, ist.

6. Werkstückauflage nach einem der vorangehenden Ansprüche, **dadurch gekennzeichnet, dass** die Führung (7) durch Umlenkrollen (8) gebildet wird, wobei vorzugsweise mindestens drei Umlenkrollen (8) vorgesehen sind, die vorzugsweise eine "U"-artige Auslenkung des Übertragungsmittels (5) bewirken.

7. Werkstückauflage nach einem der vorangehenden Ansprüche, **dadurch gekennzeichnet, dass** mindestens zwei Übertragungsmittel (5) mit jeweils mindestens einem zugeordneten Auslenkmittel (6) vorgesehen sind, wobei das erste Übertragungsmittel (5) entlang eines ersten Randbereiches (11) der Werkstückauflage (1) und das zweite Übertragungsmittel (5) entlang eines zweiten, dem ersten Randbereich gegenüberliegenden Randbereich (12) der Werkstückauflage (1) verläuft.

8. Werkstückauflage nach einem der vorangegangenen Ansprüche, **dadurch gekennzeichnet, dass** die Auflageelemente (3) länglich ausgebildet sind und sich jeweils zwischen dem ersten Randbereich (11) und dem zweiten Randbereich (12) der Werkstückauflage (1) erstrecken, wobei vorzugsweise die Auflageelemente (3) in Bezug auf die Übertragungsmittel (5) derart ausgerichtet sind, dass der Winkel zwischen der Längserstreckung der Auflageelemente (3) und der Längserstreckung der Übertragungsmittel (5) einen von 90° abweichenden Wert aufweist, wobei vorzugsweise die Abweichung von 90° zumindest 5° beträgt.

9. Werkstückauflage nach Anspruch 7 oder 8, **dadurch gekennzeichnet, dass** ein dem ersten Übertragungsmittel (5) zugeordnetes Auslenkmittel (6) und ein dem zweiten Übertragungsmittel (5) zugeordnetes Auslenkmittel (6) einander gegenüberliegen und derart synchronisiert sind, dass die Enden eines Auflageelementes (3) synchron absenkbar sind.

10. Werkstückauflage nach Anspruch 7 oder 8, **dadurch gekennzeichnet, dass** ein dem ersten Übertragungsmittel (5) zugeordnetes Auslenkmittel (6) und ein dem zweiten Übertragungsmittel (5) zugeordnetes Auslenkmittel (6) gegeneinander leicht versetzt angeordnet sind, sodass das eine Ende eines Auflageelementes (3) zeitlich leicht verzögert zum anderen Ende des Auflageelementes (3) absenkbar ist.

11. Werkstückauflage nach einem der vorangehenden Ansprüche, **dadurch gekennzeichnet, dass** das die Werkstückauflage (1) zum Verfahren des Auslenkmittels (6) einen Zugmitteltrieb (10), vorzugsweise einen umlaufenden Zugmitteltrieb (10), wie eine Antriebskette, Antriebsriemen oder Antriebsseil, aufweist, wobei vorzugsweise jener Abschnitt des umlaufenden Zugmitteltriebes (10), der dem das Auslenkmittel (6) tragenden Abschnitt des umlaufenden Zugmitteltriebes (10) gegenüberliegt, Gegengewichte trägt.

12. Werkstückauflage nach einem der vorangehenden Ansprüche, **dadurch gekennzeichnet, dass** das die Werkstückauflage (1) eine Antriebsschnittstelle (13) für das lösbare Ankuppeln eines Antriebes (18), vorzugsweise eines Motors, für das Verfahren des Auslenkmittels (6) aufweist, wobei vorzugsweise die Antriebsschnittstelle (13) eine Anordnung von Zähnen, vorzugsweise in Form eines Zahnrades, aufweist, die das lösbare Ankuppeln des Antriebes (18) über eine Verzahnung ermöglicht.

13. Werkstückbearbeitungsmaschine (14), insbesondere eine Laserbearbeitungsmaschine mit einer Werkstückauflage (1) zur Abstützung eines zu bearbeitenden, vorzugsweise plattenförmigen Werkstückes (2) und einem relativ zur Werkstückauflage (1) bewegbaren Bearbeitungswerkzeug (15), insbesondere einem Laserbearbeitungskopf, **dadurch gekennzeichnet, dass** die Werkstückauflage (1) nach einem der vorangehenden Ansprüche ausgebildet ist.

14. Werkstückbearbeitungsmaschine nach Anspruch 13, **dadurch gekennzeichnet, dass** das Auslenkmittel (6) in Bezug auf seine aktuelle Position entlang des Übertragungsmittels (5) mit der Bewegung des Bearbeitungswerkzeuges (15) oder eines vom Bearbeitungswerkzeug (15) ausgehenden Strahles relativ zur Werkstückauflage (1) derart synchronisiert Ist, dass Jeweils das bzw. die Auflageelement(e) (3) unterhalb des Bearbeitungswerkzeuges (15) oder des vom Bearbeitungswerkzeug (15) ausgehenden Strahles in der abgesenkten Position ist (sind).

15. Werkstückbearbeitungsmaschine nach einem der Ansprüche 13 oder 14, **dadurch gekennzeichnet, dass** das Auslenkmittel (6) in Bezug auf seine aktuelle Position entlang des Übertragungsmittels (5) mit der Bewegung des Bearbeitungswerkzeuges (15) oder des vom Bearbeitungswerkzeug (15) ausgehenden Strahles (15) relativ zur Werkstückauflage (1) derart abgestimmt ist, dass das Auslenkmittel (6) dem Bearbeitungswerkzeug (15) oder dem vom Bearbeitungswerkzeug (15) ausgehenden Strahl zeitlich verzögert nachgeführt wird, wobei vorzugsweise das Auslenkmittel (6) erst dann unterhalb des Bearbeitungswerkzeuges (15) positioniert ist, wenn das Werkstück (2) durch die Wirkung des Bearbeitungswerkzeuges (15) ganz oder teilweise durchstochen ist.

## Claims

1. Workpiece support (1) for supporting a preferably plate-shaped workpiece (2) to be processed, having multiple - preferably, oblong - support elements (3) that support the workpiece (2) in its support position, and having a lowering device (4) via which support elements (3) can respectively be brought from their supported position into a lowered position, wherein the lowering device (4) has at least one oblong, flexible transmission means (5) to which the support elements (3) are individually coupled along its longitudinal extent, and that can be deflected transversely to its longitudinal extent, and at least one deflection means (6) that can travel along the transmission means (5) and is designed to locally deflect said transmission means (5), wherein a local deflection of the transmission means (5) with a movement of a support element (3) or of a group of adjacent support elements (3), which is/are coupled to the transmission means (5) in the area of the local deflection, accompanies a lowered position, and wherein the deflection means (6) has a guide (7) in which the transmission means (5) is directed and via which the transmission means (5) is locally deflected, wherein the guide (7) is preferably designed such that the local deflection of the transmission means (5) takes place downwards, **characterized in that** the guide (7) has two guide regions (7a, 7b), spaced apart from one another transversely to the longitudinal extent of the transmission means (5), with an intervening region remaining clear at the top between them, and **in that** the transmission means (5) is directed with its edge regions respectively in the guide regions (7a, 7b), and **in that** the coupling of the support elements (3) to the transmission means (5) takes place in a region between its guided edge regions.

2. Workpiece support according to claim 1, **characterized in that** the transmission means (5) is held under tension - preferably, by opposing fixing devices (17) that are stationary in relation to the workpiece support (1) - and/or **in that** the transmission means (5) travels below the support elements (3), and/or **in that** the transmission means (5) is integrated into the frame of the workpiece support (1) and is at least partially covered.

3. Workpiece support according to one of claims 1 or 2, **characterized in that** the transmission means (5) travels essentially parallel to that direction along which the support elements (3) are arranged in succession; and/or **in that** the support elements (3) are coupled to the transmission means (5) via respective connecting elements (9) - preferably, in essentially vertically aligned connecting elements such as bars or connecting rods.

4. Workpiece support according to one of the preceding claims, **characterized in that** the transmission means (5) is a chain, a belt, a strip, or a cable - preferably, a bush chain or a roller chain.

5. Workpiece support according to one of the preceding claims, **characterized in that** the guide (7) is a curved guide - preferably, as part of a crank guide.

6. Workpiece support according to one of the preceding claims, **characterized in that** the guide (7) is formed by deflection rollers (8), wherein at least three deflection rollers (8) are provided that preferably produce a "U"-like deflection of the transmission means (5).

7. Workpiece support according to one of the preceding claims, **characterized in that** at least two transmission means (5) having respectively at least one associated deflection means (6) are provided, wherein the first transmission means (5) travels along a first edge region (11) of the workpiece support (1), and the second transmission means (5) travels along a second edge region (12), situated opposite the first edge region, of the workpiece support (1).

8. Workpiece support according to one of the preceding claims, **characterized in that** the support elements (3) are of oblong design and respectively extend between the first edge region (11) and the second edge region (12) of the workpiece support (1), wherein the support elements (3) are preferably aligned, with respect to the transmission means (5), such that the angle between the longitudinal extent of the support elements (3) and the longitudinal extent of the transmission means (5) has a value deviating from 90°, wherein the deviation from 90° is preferably at least 5°.

9. Workpiece support according to claim 7 or 8, **characterized in that** a deflection means (6) associated with the first transmission means (5) and a deflection means (6) associated with the second transmission means (5) are situated opposite one another and synchronized such that the ends of a support element (3) can be synchronously lowered.

10. Workpiece support according to claim 7 or 8, **characterized in that** a deflection means (6) associated with the first transmission means (5) and a deflection means (6) associated with the second transmission means (5) are arranged slightly offset from one another, such that the one end of a support element (3) can be lowered with a slight time delay relative to the other end of the support element (3).

11. Workpiece support according to one of the preceding claims, **characterized in that** the workpiece support (1) has a traction mechanism drive (10) for movement of the deflection means (6) - preferably, a revolving traction mechanism drive (10), such as a drive chain, drive belt, or drive cable - wherein that segment of the revolving traction mechanism drive (10) that is situated opposite the segment of the revolving traction mechanism drive (10) that bears the deflection means (6) preferably bears counterweights.

12. Workpiece support according to one of the preceding claims, **characterized in that** the workpiece support (1) has a drive interface (13) for the releasable coupling of a drive (18) - preferably, of a motor - for the movement of the deflection means (6), wherein the drive interface (13) preferably has an arrangement of teeth - preferably, in the form of a gearwheel - that enables the releasable coupling of the drive (18) via the teeth.

13. Workpiece processing machine (14) - in particular, a laser processing machine having a workpiece support (1) for supporting a preferably plate-shaped workpiece (2) to be processed and having a processing tool (15) - in particular, a laser processing head - that can be moved relative to the workpiece support (1) - **characterized in that** the workpiece support (1) is designed according to one of the preceding claims.

14. Workpiece processing machine according to claim 13, **characterized in that** the deflection means (6), in relation to its current position along the transmission means (5), is synchronized with the movement, relative to the workpiece support (1), of the processing tool (15) or of a beam emanating from the processing tool (15), such that the respective support element or elements (3) below the processing tool (15) or below the beam emanating from the processing tool (15) is (are) in the lowered position.

15. Workpiece processing machine according to one of claims 13 or 14, **characterized in that** the deflection means (6) is matched, with regard to its current position along the transmission means (5), with the movement, relative to the workpiece support (1), of the processing tool (15) or of the beam (15) emanating from the processing tool (15), such that the deflection means (6) tracks the processing tool (15) or the beam emanating from the processing tool (15) with a time delay, wherein the deflection means (6) is preferably positioned below the processing tool (15) only when the workpiece (2) is entirely or partially pierced due to the action of the processing tool (15).

## Revendications

1. Support de pièce à usiner (1) conçu pour supporter une pièce à usiner (2), de préférence sous la forme d'une plaque, muni de plusieurs éléments d'appui (3), de préférence de forme oblongue, qui supportent la pièce à usiner (2) dans leur position d'appui et qui peuvent être déplacés par un dispositif d'abaissement (4), par le biais des éléments d'appui (3), respectivement de la position d'appui vers une position abaissée, le dispositif d'abaissement (4) comportant au moins un moyen de transfert longitudinal flexible (5) sur lequel les éléments d'appui (3) sont accouplés individuellement le long de son extension longitudinale et qui peut être dévié transversalement par rapport à son extension longitudinale et qui comporte au moins un moyen de déviation (6) pouvant être déplacé le long du moyen de transfert (5) et qui est conçu de manière à dévier localement le moyen de transfert (5), une déviation locale du moyen de transfert (5) avec un mouvement d'un élément d'appui (3) ou d'un groupe d'éléments d'appui voisins (3), qui est accouplé au moyen de transfert (5) dans la zone de la déviation locale, résulte en une position abaissée et où le moyen de déviation (6) comporte un guidage (7) dans lequel le moyen de transfert (5) est guidé et qui est dévié localement par le moyen de transfert (5), le guidage (7) étant conçu de préférence de telle façon que la déviation locale du moyen de transfert (5) se fait vers le bas, **caractérisé en ce que** le guidage (7) comporte deux zones de guidage (7a, 7b) placées à une certaine distance l'une de l'autre, transversalement à l'extension longitudinale du moyen de transfert (5), avec une zone intermédiaire qui reste dégagée vers le haut et **en ce que** le moyen de transfert (5) est respectivement guidé avec ses zones périphériques dans les zones de guidage (7a, 7b) et **en ce que** l'accouplement des éléments d'appui (3) se fait sur le moyen de transfert (5) dans la zone comprise entre ses zones périphériques guidées.

2. Support de pièce à usiner selon la revendication 1, **caractérisé en ce que** le moyen de transfert (5) est maintenu sous tension, de préférence par des dispositifs de fixation (17) opposés et fixes par rapport au support de pièce à usiner (1) et/ou **en ce que** le moyen de transfert (5) se déplace sous les éléments d'appui (3) et/ou **en ce que** le moyen de transfert (5) est intégré dans le cadre du support de pièce à usiner (1) et qu'il est au moins partiellement recouvert.

3. Support de pièce à usiner selon une des revendications 1 ou 2, **caractérisé en ce que** le moyen de transfert (5) se déplace de manière essentiellement parallèle à la direction le long de laquelle les éléments d'appui (3) sont placés l'un derrière l'autre et/ou **en ce que** les éléments d'appui (3) sont respectivement accouplés au moyen de transfert (5) par des éléments de liaison (9), de préférence des éléments d'accouplement orientés de manière à peu près verticale, tels que des tiges ou des bielles.

4. Support de pièce à usiner selon une des revendications précédentes, **caractérisé en ce que** le moyen de transfert (5) est une chaîne, une courroie, une bande ou une corde, de préférence une chaîne à douilles ou une chaîne à rouleaux.

5. Support de pièce à usiner selon une des revendications précédentes, **caractérisé en ce que** le guidage (7) est un guidage à courbes, qui fait partie de préférence d'un guidage à coulisse.

6. Support de pièce à usiner selon une des revendications précédentes, **caractérisé en ce que** le guidage (7) est constitué par des rouleaux de déviation (8) et **en ce qu'**on prévoit de préférence au moins trois rouleaux de déviation (8) qui provoquent une déviation de préférence en forme de « U » du moyen de transfert (5).

7. Support de pièce à usiner selon une des revendications précédentes, **caractérisé en ce qu'au** moins deux moyens de transfert (5) respectivement munis d'au moins un moyen de déviation (6) correspondant sont prévus, le premier moyen de transfert (5) s'étendant le long d'une première zone périphérique (11) du support de pièce à usiner (1) et le deuxième moyen de transfert (5) s'étendant le long d'une deuxième zone périphérique (12) placée en face de la première zone périphérique du support de pièce à usiner (1).

8. Support de pièce à usiner selon une des revendications précédentes, **caractérisé en ce que** les éléments d'appui (3) sont configurés de manière oblongue et qu'ils s'étendent respectivement entre la première zone périphérique (11) et la deuxième zone périphérique (12) du support de pièce à usiner (1), les éléments d'appui (3) étant orientés de préférence par rapport au moyen de transfert (5) de telle façon que l'angle entre l'extension longitudinale des éléments d'appui (3) et l'extension longitudinale des moyens de transfert (5) atteigne une valeur qui diverge des 90 degrés et la divergence par rapport aux 90 degrés atteignant de préférence au moins 5 degrés.

9. Support de pièce à usiner selon la revendication 7 ou 8, **caractérisé en ce qu'un** moyen de déviation (6) affecté au premier moyen de transfert (5) et un moyen de déviation (6) affecté au deuxième moyen de transfert (5) sont placés face à face et sont synchronisés de telle manière que les extrémités d'un élément d'appui (3) puissent être abaissées de manière synchrone.

10. Support de pièce à usiner selon la revendication 7 ou 8, **caractérisé en ce qu'un** moyen de déviation (6) affecté au premier moyen de transfert (5) et un moyen de déviation (6) affecté au deuxième moyen de transfert (5) sont disposés de manière légèrement décalée l'un par rapport à l'autre, si bien que l'une des extrémités d'un l'élément d'appui (3) puisse être abaissée avec un léger décalage de temps par rapport à l'autre extrémité de l'élément d'appui (3).

11. Support de pièce à usiner selon une des revendications précédentes, **caractérisé en ce que** pour le déplacement du moyen de déviation (6), le support de pièce à usiner (1) dispose d'un entraînement à traction (10), de préférence d'un entraînement à traction périphérique (10), tel qu'une chaîne d'entraînement, une courroie d'entraînement ou une corde d'entraînement, la section de l'entraînement à traction périphérique (10) qui est placée en face de la section de l'entraînement à traction périphérique (10) qui supporte le moyen de déviation (6) portant de préférence des contrepoids.

12. Support de pièce à usiner selon une des revendications précédentes, **caractérisé en ce que** le support de pièce à usiner (1) comporte une interface d'entraînement (13) pour l'accouplement détachable d'un entraînement (18), de préférence d'un moteur, pour le déplacement du moyen de déviation (6), l'interface d'entraînement (13) comportant de préférence un dispositif muni de dents, de préférence sous la forme d'une roue dentée, qui permet l'accouplement détachable de l'entraînement (18) par le biais d'une denture.

13. Machine d'usinage de pièces (14), en particulier machine d'usinage par laser munie d'un support de pièce à usiner (1) conçu pour supporter une pièce à usiner (2), de préférence sous forme de plaque et d'un outil d'usinage (15) mobile par rapport au support de pièce à usiner (1), en particulier d'une tête d'usinage au laser, **caractérisée en ce que** le support de pièce à usiner (1) est conçu selon une des revendications précédentes.

14. Machine d'usinage de pièces selon la revendication 13, **caractérisée en ce que** le moyen de déviation (6) est synchronisé par rapport à sa position actuelle le long du moyen de transfert (5) avec le mouvement de l'outil d'usinage (15) ou d'un rayon partant de l'outil d'usinage (15) par rapport au support de pièce à usiner (1), de telle façon que l'élément ou les éléments d'appui (3) respectifs en dessous de l'outil d'usinage (15) ou le rayon partant de l'élément d'usinage (15) se trouve(nt) en position abaissée.

15. Machine d'usinage de pièces selon une des revendications 13 ou 14, **caractérisée en ce que** le moyen de déviation (6) est apparié par rapport à sa position actuelle le long du moyen de transfert (5) avec le mouvement de l'outil d'usinage (15) ou du rayon (15) partant de l'outil d'usinage (15) par rapport au support de pièce à usiner (1) de telle façon que le moyen de déviation (6) suive l'outil d'usinage (15) ou le rayon partant de l'outil d'usinage (15) avec un décalage dans le temps, le moyen de déviation (6) n'étant positionné en dessous de l'outil d'usinage (15) que de préférence au moment où la pièce à usiner (2) est entièrement ou partiellement perforée par l'effet de l'outil d'usinage (15).
